# EUROPEAN PATENT APPLICATION

(11) **EP 3 195 800 A1**
(43) Date of publication of application: **26.07.2017**
(21) Application number: 16152262.8
(22) Date of filing: 21.01.2016
(51) Int. Cl.: A61B 5/1172, G06K 9/00

(54) **DEVICE AND METHOD FOR DEVELOPING LATENT FINGERPRINTS ON A BANKNOTE OR DOCUMENT**

(71) Applicant: European Central Bank, 60314 Frankfurt am Main (DE)
(72) Inventor: Kenny, David, 60431 Frankfurt am Main (DE)
(74) Representative: Prinz & Partner mbB

(57) **Abstract**

The present invention relates to a method and a device (1) for developing and/or inspecting latent fingerprints (2, 3) on a document, in particular a banknote (10) having a first surface (11) and a second surface (12). The device comprises a document carrier (20) comprising holding means (21) for holding the document, and is adapted to provide access to the first and/or second surface (11, 12) of the document, and a powder application system (30), comprising: a powder reservoir (31), adapted to contain a fingerprint development powder (32) having powder grains (33), a metering and agitation unit (35), a powder dispenser (36), wherein the powder application system is adapted to apply the fingerprint development powder (32) to the first and/or second surface (11,12) of the document, and to provide a predetermined impact velocity (vᵢ) of the powder grains (33) in a moment of contact with the first and/or second surface (11, 12) of the document (10).

## Description

### FIELD OF THE INVENTION

The invention relates to a device for developing and/or inspecting latent fingerprints on banknotes or documents. The invention also relates to a method of developing and/or inspecting latent fingerprints on banknotes or documents using the fingerprint development device.

### BACKGROUND

The science of fingerprint identification, also called "dactyloscopy", evolved early in the 20^{th} century. It relies on the analysis and classification of patterns observed in fingerprints. A fingerprint is an impression on a surface left by the friction ridges of a finger. A friction ridge is a raised portion of the epidermis on the palmar or plantar skin. Friction ridges are also known as dermal ridges or dermal papillae. Latent fingerprints are fingerprints that are not or only poorly visible, usually involuntary placed on the surface of touched objects. Latent fingerprints may comprise natural secretions of the skin and/or other substances adhering to the skin of the fingers, e.g. oil, grease, blood, dead cells or other kind of dirt. Natural secretions of the skin can generally be divided into sebum and sweat. Sebaceous glands secrete sebum. Eccrine and apocrine glands secrete sweat. Factors which affect the quality of friction ridge impressions are numerous. Pliability of the skin, deposition pressure, slippage, the material properties of the material from which the surface is made, the roughness of the surface and the substance deposited are just some of the various factors influencing the quality of a latent fingerprint.

To compare fingerprints, different classification systems have evolved. Most of them are based on the presence and characteristic of distinct patterns of the friction ridges, as there are for example arches, loops and whorls.

To enable the examination and comparison of a latent fingerprint, the contrast of the mark differentiating the imprints of the friction ridges and the areas of the intermediary grooves usually has to be enhanced. This process could be referred to as fingerprint development, in analogy to photo development. A powder, chemical agents or a physical process is used as developer to produce a high degree of visual contrast between the ridge patterns and the surface on which a fingerprint has been deposited. The developing agents typically depend on the presence of organic materials or inorganic salts for their effectiveness. Latent Fingerprints are frequently formed from the aqueous-based secretions of the eccrine glands of the fingers and palms with additional material from sebaceous glands primarily from the forehead. This latter contamination results from the common human behaviors of touching the face and hair. Therefore, the resulting latent fingerprints consist usually of a substantial proportion of water with small traces of amino acids and chlorides mixed with a fatty, sebaceous component which contains a number of fatty acids and triglycerides. However, the detection of a small proportion of reactive organic substances such as urea and amino acids is far from easy.

Numerous development techniques are known today. However, relatively few of these see widespread use globally. The suitability of a certain development process is hereby highly dependent on the surface and material of the inspected object. For example a major distinction is made between porous and nonporous surfaces. In addition to the type of surface, another determining factor in choosing the proper process is the suspected residue of the latent print and the condition of the surface. This includes for example dryness/wetness, dirtiness, and tackiness. In regard to a fingerprint development powder as development agent, the properties of the fingerprint development powder, the material and surface properties of the inspected object, as well as the properties of the latent fingerprint, in combination determine the optimum operational parameters required to develop a high quality representation of the latent fingerprint. Speaking in the analogy of photo development, the surface and material properties of the inspected object and the composition of the constituents of the latent fingerprint correspond to the light sensitivity of the film, placement of the fingerprint can be seen as exposure of the film, and the process to make the latent fingerprint visible corresponds to the process of developing the photo. Staying in this analogy, the developed latent fingerprint may be underexposed or overexposed, which leads to too little contrast between areas corresponding to the grooves and areas corresponding to the ridges in the fingerprint for proper examination. The invention mainly relates to latent fingerprint development via fingerprint development powder.

An apparatus for developing a willfully placed fingerprint on a document, for example an ID or a cashiers-check, is known from US 3,844,250. A rotatable scoop scoops up fingerprint-developing powder and dumps it on the fingerprint carrying document to develop fingerprints thereon. The document is supported on a fixed platform in the path-of-travel of the scoop which is rotated by a hand crank.

Two other apparatuses for developing a willfully placed fingerprint on a medium, such as a check, are known from US 3,831,552 and US 3,897,749. A rotatable magnet is mounted within a cavity comprising a supply of magnetizable powder to sweep the powder across an aperture in a medium support surface.

However, the apparatuses described in US 3,844,250, US 3,831,552 and US 3,897,749 are intended to be used in direct temporal relation to the willful placement of the fingerprint. Furthermore, the region of interest on the document for fingerprint development is known in advance, as the fingerprint is placed in a specific region of the document.

### SUMMARY

It is an object of the invention to provide a device for developing and/or inspecting latent fingerprints on a banknote or document. It is a further object of the invention to provide a method of developing and/or inspecting latent fingerprints on a banknote or document. The banknote or document comprises a first and a second surface. The one or more latent fingerprints may be present on the first and/or the second surface of the banknote or document. For reasons of simplicity, banknotes as well as any other documents having a standardized size will be referred to as "documents", e.g. the "document carrier" may also carry a banknote. However, the invention particularly applies to banknotes.

In one aspect of the invention the device can comprise a document carrier. The document carrier may comprise holding means adapted to hold the document. The document carrier may also comprise supporting means adapted to support the document. Stated differently, the document carrier may be adapted to maintain and fixate the document in a defined position in relation to a powder dispenser to enable the application of powder to the first and/or second surface of the document.

The document carrier and thus the holding means and/or the supporting means can be adapted to provide access to the first and/or second surface of the document. Advantageously, the document carrier may be adapted to avoid damaging the latent fingerprints on the first surface of the document and on the second surface of the document.

The document carrier may support and/or fix the document in a relative position to other components of the device for enabling the latent fingerprint development and/or inspection.

In an advantageous aspect of the invention, the document carrier may optionally further be configured to have a rotational degree of freedom of the document carrier. In other words, the document carrier may be mounted pivotally. Stated differently, the document carrier may be tilted to tilt the document, thereby providing the document with a surface inclination.

The document carrier may also be configured to have a first translational degree of freedom of the document carrier and/or a second translational degree of freedom of the document carrier. In other words, the document carrier may be mounted being displaceable in a first and/or being displaceable in a second direction. Therefore, the document carrier may be manually rearranged within the device or moved translationally by an actuator, e.g. a linear drive. The displacement may be in discrete steps or continuous. The second translational degree of freedom of the document carrier may have a directional component perpendicular to the first translational degree of freedom of the document carrier. Stated differently, the first translational degree of freedom of the document carrier and the second translational degree of freedom of the document carrier may be non parallel and preferably perpendicular. As such, the document carrier may be mounted being displaceable in a horizontal direction and/or in a vertical direction. This aspect of the invention may provide a more regional differentiated development of latent fingerprints and is advantageous for the method of developing latent fingerprints on documents.

In another aspect of the invention, the device can comprise a powder application system. The powder application system may comprise a powder reservoir and/or a metering and agitation unit and/or a powder dispenser. The powder reservoir can be adapted to contain a fingerprint development powder consisting of powder grains. The metering and agitation unit may be adapted to accurately meter and precisely agitate a determined powder flow consisting of powder grains moving from the powder reservoir through the powder dispenser. The powder application system may be adapted to apply a predetermined and advantageously variable amount of the fingerprint development powder to the first and/or second surface of the document. Advantageously, the powder application system may be adapted to provide a predetermined impact velocity vᵢ and/or a predetermined impact angle θ of the powder grains in a moment of contact with the first and/or second surface of the document. This aspect of the invention improves the quality of the latent fingerprint development process and is advantageous for the method of developing latent fingerprints on documents.

In an advantageous aspect, the document carrier and the powder dispenser are arranged such that powder grains drop vertically onto the first and/or second surface of the document. A distance of the drop can be variable, i.e. adjustable or fixed. Preferably, the distance may be greater than 5 mm. More preferably, the distance may be greater than 10 mm. Even more preferably, dependent upon a mean particle size and a mass density of the fingerprint development powder, the distance may be greater than 20 mm to 50 mm. This aspect of the invention allows for a maximal drop velocity of the powder grains. Furthermore, this aspect of the invention simplifies the inspection of the first and/or second surface of the document and/or the points of impact P1 of the powder grains on the first and/or second surface of the document. Also, a longer distance may lead to a more even distribution of powder grains on the first and/or second surface of the document. However, a distance of more than 10 cm to 15 cm or more than 20 cm may enlarge the overall size of the device without providing anymore relevant benefits. Therefore a distance of less than 10 cm to 15 cm or less than a maximum of 20 cm is also preferable. Stated differently, depending on physical properties of the fingerprint development powder and depending on the embodiment of inspection means and/or document carrier, a distance of drop of the powder grains in the range of 5 mm to 200 mm, and more preferably in the ranges of 5 mm to 150 mm and 10 mm to 100 mm may provide both, a beneficial impact velocity and good inspection. This aspect of the invention may improve the quality of the latent fingerprint development and is advantageous for the method of developing latent fingerprints on documents.

In another advantageous aspect of the invention, the powder application system may be configured to have a first and/or a second translational degree of freedom of the powder application system. In other words, the powder application system may be mounted being displaceable in a first and/or being displaceable in a second direction. Therefore, the powder application system and/or the powder dispenser may be manually rearranged within the device or moved translationally by an actuator, e.g. a linear drive. The displacement may be in discrete steps or continuous. The second translational degree of freedom of the powder application system may have a directional component transversal to the first translational degree of freedom of the powder application system. Stated differently, the first translational degree of freedom of the powder application system and the second translational degree of freedom of the powder application system may be non parallel and preferably perpendicular.

Preferably, the device may be configured to have a rotational degree of freedom, and one and more preferably two translational degrees of freedom, wherein the rotational degree of freedom and the one or the two translational degrees of freedom may vary the relative position of the powder dispenser in respect to the document on or in the document carrier. For an illustrative example only, the document carrier may comprise a rotational degree of freedom; alternatively, the powder dispenser may comprise a rotational degree of freedom. The first and the second translational degree of freedom may be non parallel and more preferably perpendicular. For example, the device may comprise a first horizontal or vertical translational degree of freedom of the document carrier and a second translational degree of freedom of the powder application system preferably perpendicular to the first translational degree of freedom of the document carrier. The device may alternatively comprise a first and a second translational degree of freedom of the document carrier or a first and a second translational degree of freedom of the powder application system. The device may also alternatively be configured to have a first translational degree of freedom of the document carrier or a first translational degree of freedom of the powder application system only. Advantageously, the first translational degree of freedom may be horizontal and the second translational degree of freedom may be vertical. However, the device may also alternatively comprise no translational degrees of freedom and one rotational degree of freedom of the document carrier. This aspect of the invention provides a more regional differentiated development of latent fingerprints and is advantageous for the method of developing latent fingerprints on documents.

In another aspect of the invention, the device may comprise document inspection means adapted to inspect the surface of the document and/or the development of the latent fingerprints. For example, the inspection means may comprise an unobstructed path of view from the outside of the device through a transparent window or an array of optical elements onto the first and/or second surface of the document. Alternatively, the inspection means may comprise one or more photodetectors. Differently said, the document inspection means may comprise sensors adapted to sense light or other electromagnetic energy, such as X-rays or microwaves. The one or more photodetectors may be a type of camera. The one or more photodetectors may be arranged within the device to allow inspection of the first and/or second surface of the document and/or of the fingerprint development powder applied to the first/and or second surface of the document. The process/method of inspecting the document may also comprise directly or indirectly deriving operational parameters from properties of the surface of the document and/or the fingerprint development powder applied to the surface. The document inspection means may further comprise an electronic evaluation system for processing and manipulating the signals of the photodetectors. This aspect of the invention further improves the latent fingerprint development and is advantageous for the method of developing latent fingerprints on documents.

In another aspect of the invention, the device may be configured to remove excess fingerprint powder grains from the surface of the document. For example, the document carrier may be adapted to enable a cascading down of the excess fingerprint powder grains. Stated differently, the supporting means of the document carrier may provide a surface inclination α to the surface of the document, suitable to stimulate a rolling or dropping movement of the powder grains. The document carrier may be tilted to assume a first fixed maximum angle α with respect to the horizontal direction H in a first step and a second fixed maximum angle α with respect to the horizontal direction H by rotating the document carrier about an axis in first direction of rotation and in a second direction in a second step. The first direction of rotation can than be opposite to the second direction of rotation. Alternatively, the device may comprise powder removal means, for example a compressed air nozzle or a suction nozzle, adapted to remove the excess fingerprint development powder. Stated differently, the device or the powder removal means can be configured to remove those powder grains from the surface of the document, which are not in direct contact with the substances the latent fingerprints comprise of. This aspect of the invention provides for an advantageous latent fingerprint development and is advantageous for the method of developing latent fingerprints on documents.

In another aspect of the invention, the device may comprise housing means, adapted to comprise the document carrier and the powder dispenser and/or the powder application system and/or the powder removal means and/or the document inspection means and/or other components of the device in an inside. The housing means may be adapted to protect the components of the device. The housing means may further be adapted to contain dust comprising the fingerprint development powder within. For example, the housing means may be sealed. The housing means may be adapted to shield the inside of the device from an outside of the device or vice versa in regard to electromagnetic or ionizing radiation. This aspect of the invention enhances user safety, reduces contamination of the environment as well as contamination of the document and destruction of or damage to the latent fingerprints.

In another aspect of the invention, the device may comprise powder recirculation means. The powder recirculation means can be adapted to recirculate excess fingerprint development powder grains that have been removed from the surface of the document back into the powder reservoir. In particular, the recirculation means may comprise an Archimedes' screw configured to lift the powder from a bottom of the device to the powder application system. This aspect of the invention reduces the consumption of the latent fingerprint development powder. It may further increase the efficiency of the latent fingerprint development method.

In another aspect of the invention, the device may comprise feeding means, adapted to automatically or manually feed the document to the document carrier. This aspect of the invention can improve the efficiency of the latent fingerprint development method.

In another aspect of the invention, the device may comprise extraction means, adapted to automatically or manually extract the document from the document carrier. This aspect of the invention can improve the efficiency of the latent fingerprint development method.

In another advantageous aspect of the invention, the powder application system may be configured to adapt the impact velocity (vᵢ) of the powder grains on the surface of the document. Stated differently, the powder application system may comprise impact velocity control means. The impact velocity of the power grains may be adapted by adjusting the angle of inclination α of the document carrier and/or adapting the distance between the powder dispenser and the document carrier. This aspect of the invention can improve the quality of the latent fingerprint development and is advantageous for the method of developing latent fingerprints on documents.

In another advantageous aspect of the invention, the device may be configured to adapt the impact angle θ of the powder grains in a moment of contact with the first and/or second surface of the document. This may advantageously be done by adapting the angle of surface inclination α, e.g. by adapting the angle of inclination α of the document carrier. This aspect of the invention can also improve the quality of the latent fingerprint development and is advantageous for the method of developing latent fingerprints on documents.

In another advantageous aspect of the invention, the document carrier may generally be configured to be tiltable around an axis or pivot leading to a rotational degree of freedom of the document carrier. More specifically, the supporting means comprised in the document carrier may be tiltable around the pivot. The tiltable pivot can have a rotational degree of freedom resulting in a changeable surface inclination α. In particular, the document carrier may be configured to rotate or pivot around an axis. The rotation may be performed in a first step in a first direction for applying a first amount of powder to the document and, afterwards in a second step in a second, opposite, direction for applying a second amount of powder to the document. In the first step, the powder may only be applied to a first part of one surface of the document in the first step (for example the first half or a bit more than the first half). Furthermore, in the second step, the powder may be applied to only a second or remaining part of the one surface of the document.

Alternatively, the powder may also be repeatedly applied to only the first part of the document. This aspect of the invention may improve the quality of the latent fingerprint development, as areas of the surface of the document comprising latent fingerprints may be developed without overdeveloping other parts of the surface of the document. It therefore may be advantageous for the method of developing latent fingerprints on documents.

In another advantageous aspect of the invention, the device may be configured to adapt the removal force Fᵣ acting on the powder grains applied to the first and/or second surface of the document. This aspect of the invention can improve the quality of the latent fingerprint development process. The removal force Fᵣ may be adapted by adjusting the angle of inclination α of the document carrier. The document carrier can assume a first angle of inclination α in a first direction of rotation and a second angle of inclination in a second direction of rotation which is opposite to the first direction. The first angle of inclination and the second angle of inclination may have substantially the same value with respect to the horizontal direction H. This aspect of the invention may improve the quality of the latent fingerprint development process and is advantageous for the method of developing latent fingerprints on documents.

In another advantageous aspect of the invention, the device may comprise a control unit adapted to control at least the metering and agitation unit. The control unit may optionally also receive and process data provided by one or more sensors (which may include aforementioned photodetectors), switches or other input means comprised by the device. Therefore, the control unit may control the metering and agitation unit based on operational parameters directly or indirectly retrieved through the document inspection means. Advantageously, the control unit may further determine an impact velocity vᵢ and/or an impact angle θ and/or an angle of inclination α of the document carrier with respect to the horizontal direction H and/or a distance d between the powder dispenser and the document carrier in a vertical direction V and/or a distance t in the horizontal direction H to provide a proper development of the latent fingerprints directly. The adaption of the distances and/or inclinations of the document carrier and the powder dispenser may manually or advantageously automatically be performed based on properties of the surface of the document and/or the fingerprint development powder applied to the surface of the document. This aspect of the invention can improve the quality and the efficiency of the latent fingerprint development and is advantageous for the method of developing latent fingerprints on documents.

The invention further provides a method (or process) of developing latent fingerprints on a document using the device. The method can comprise the steps of placing the document on or in a document carrier, applying a fingerprint development powder contained in a powder reservoir to a first and/or second surface of the document, removing excess powder grains from the surface of the document, and inspecting the document utilizing the document inspection means. The removal of excess powder grains from the surface of the document may advantageously be performed by rotating/pivoting/tilting the document carrier with respect to the horizontal direction H. Rotating/pivoting/tilting of the document carrier may be performed in a first step, in a first direction of rotation up to a predetermined maximum angle of inclination of the document carrier with respect to horizontal direction H and afterwards, in a second step, in a second direction of rotation up to a second maximum predetermined angle of inclination of the document carrier with respect to the horizontal direction H. In the first step, fingerprint development powder may then be applied to a first part of a first surface of the document and in the second step, fingerprint development powder may be applied to a second part of the first surface of the document on the document carrier. The first and the second part can be overlapping.

Depending on the result of the inspection, a next step of the method may be to start a new iteration of the latent fingerprint development method by again applying the fingerprint development powder contained in the powder reservoir to the first and/or second surface of the document. Alternatively, in the case of one or more properly developed latent fingerprints or in the case of absence of latent fingerprints, the method for developing latent fingerprints may be finished. The document may then be removed from the document carrier. This aspect of the invention reduces the risk of overdeveloping the latent fingerprints. It also further enhances the quality of the developed latent fingerprints.

In another advantageous aspect of the invention, the method of developing latent fingerprints may comprise a control loop, wherein the result of the inspection of the document determines the impact velocity vᵢ and/or the impact angle θ of the powder grains on the document and/or the angle of inclination α of the document carrier and/or the distance d in vertical direction V and/or the distance t in horizontal direction H between the powder dispenser and the document carrier for a following iteration of the latent fingerprint development method. This aspect of the invention may enhance the quality of the developed latent fingerprints as well as the efficiency of the method of latent fingerprint development on a document.

### BRIEF DESCRIPTION OF DRAWINGS

Further aspects and features of the invention ensue from the following description of preferred embodiments of the invention with reference to the accompanying drawings, wherein
FIG. 1 is a simplified perspective view of an embodiment of the device.
FIG. 2 is a simplified cross sectional view of another embodiment of the device.
FIG. 3 shows a simplified drawing of a surface of a document and a powder grain having an impact velocity vᵢ and an impact angle θ,
FIG.4 shows a simplified drawing of four exemplary powder grains of a fingerprint development powder, of which one is an excess powder grain being removed by a removal force Fᵣ.

### DETAILED DESCRIPTION OF AN EXAMPLE EMBODIMENT

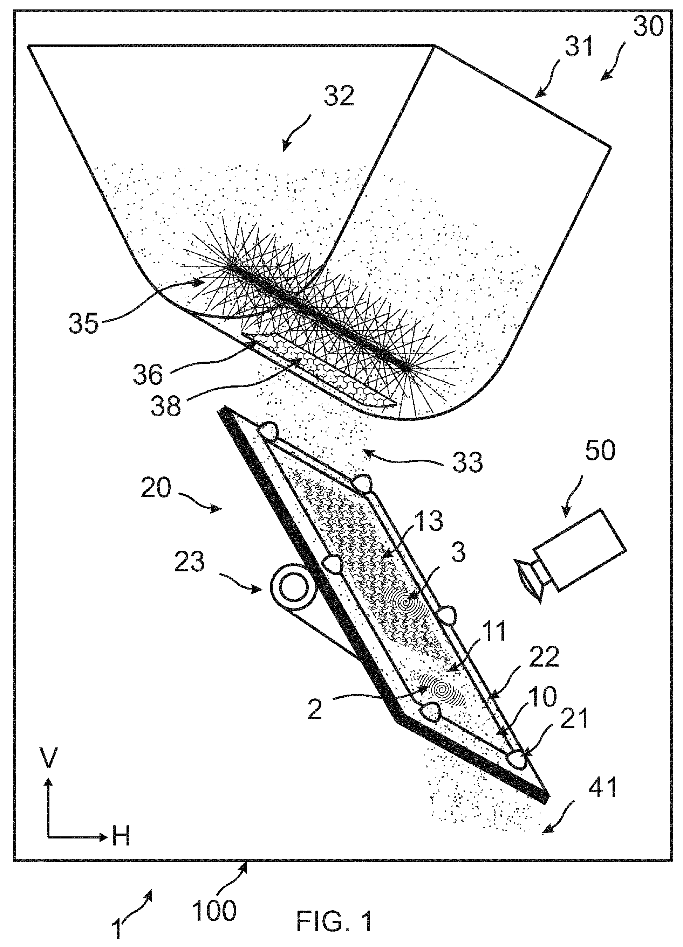

FIG. 1 is a simplified perspective view of an embodiment of the device. The device 1 comprises a document carrier 20 comprising optional holding means 21 for holding a document 10 and/or supporting means 22 for supporting the document 10. In this exemplary embodiment, the supporting means 22 are embodied as a surface of a flat panel 22. Holding means 21 can be implemented as a multitude of protrusions or nipples 21 arranged in the perimeter of the flat panel 22 in order to hold (or fix) the document in a defined position relative to the supporting means. However, other embodiments of the document carrier 20 may be possible. For example a clip or the like may hold the document 10 onto the supporting means 22. Alternatively, an area of the surface of the supporting means 22 may be adhesive for the document 10. Furthermore, in still other embodiments the supporting means 22 may not only be configured as a flat panel, but also for example as a rotatable cylindrical drum or a movable conveyor belt.

The document carrier 20 can advantageously be tilted around an axis of rotation or a pivot 23 leading to a rotational degree of freedom resulting in a changeable surface inclination α. The removal of excess powder grains from the surface of the document 10 may then advantageously be performed by rotating/pivoting/tilting the document carrier 20 (and thereby of course the surface of the document 10) with respect to the horizontal direction H. Rotating/pivoting/tilting of the document carrier may be performed in a first step, in a first direction of rotation up to a predetermined maximum angle of inclination α of the document carrier with respect to the horizontal direction H and afterwards, in a second step, in a second direction of rotation up to a second maximum predetermined angle of inclination of the document carrier 20 with respect to the horizontal direction H. In the first step, fingerprint development powder may then be applied to a first part of a first surface of the document and in the second step fingerprint development powder may be applied to a second part of the first surface of the document 10 on the document carrier 20. The first and the second part can be overlapping.

In case of the supporting means 22 embodied as a cylindrical drum, the cylindrical drum may be rotated and/or laterally moved to also achieve a change in surface inclination α. An impact angle θ of the powder grains 33 hitting the surface 11, 12 of the document 10 depends on the surface inclination α.

Just as an example, a first latent fingerprint 2 and a second latent fingerprint 3 may be located on the first surface 11 of the document 10. The second latent fingerprint 3 is disposed in an area of graphic illustrations 13. Graphical patterns of the illustrations 13 may hamper or distort the visual inspection of the latent fingerprint 3. Dyes, the graphic illustrations 13 consist of, may locally alter the surface and material properties of the document 10. Therefore, the latent fingerprints 2, 3 each may develop at different speeds. For example, it may be necessary to iterate the development steps according to the claimed method on one latent fingerprint 2 more often than on another latent fingerprint 3.

The device 1 further comprises a powder application system 30 comprising a powder reservoir 31 adapted to contain powder grains 33 of a fingerprint development powder 32, a metering and agitation unit 35 and a powder dispenser 36. In the present embodiment, the metering and agitation unit 35 is arranged within the powder reservoir 31 adjacent the powder dispenser 36. The powder reservoir 31 can have an inner space substantially tapering towards its lowest point and being surrounded by a sidewall and a front facing and a rear facing wall. The sidewall can be described as being 'V'-shaped with a rounded bottom and having an extruded depth. Stated differently, the sidewalls comprise a local sidewall inclination β. Advantageously, the local sidewall inclination β is chosen to enable a trickling or cascading of the powder grains 33, such that the metering and agitation unit 35 is reliably provided with the powder grains 33 to enable a controlled flow of powder grains 33 towards the powder dispenser 36. The powder dispenser 36 can be an elongated aperture in a bottom facing area of the sidewall. The elongated aperture can have a length in the direction of extrusion of the sidewall and a width shorter than the length. The length of the powder dispenser 36 advantageously can be longer than a width of the shorter side of the document 10 provided on the document carrier 20. The embodied powder dispenser 36 can further comprise a sieve 38 having a pore size and a distance between the pores. The pore size and the distance between the pores can be chosen such that they inhibit an undesired dropping of the powder grains 33. However, if the metering and agitation unit 35 is activated, a controlled flow of powder grains 33 through the powder dispenser 36 should occur. In this embodiment, an activation of the metering and agitation unit 35 leads to a controlled flow of powder grains 33 that cascade through the powder dispenser 36 and onto the surface 11, 12 of the document 10. The document carrier in the present embodiment is arranged below the powder dispenser 36. The distance d between the document on the document carrier 20 and the power dispenser 36 can be in the range of 5 mm to 200 mm, preferably in the range of 5 mm to 150 mm, as the distance d should be no greater than necessary to ensure an uninterrupted flow of the powder grains 33, a predetermined impact velocity vᵢ, an even distribution of powder grains 33 on the surface 11, 12 of the document and sufficient inspection of that flow and/or the first and/or second surface 11, 12 of the document 10 and/or the points of impact P1 of the powder grains 33 on the document 10. The powder grains 33, accelerated by gravity, naturally hit the surface 11 of the document 10 and thereby develop the latent fingerprints 2, 3. The powder grains 33 are then accelerated in the gravitational field which exerts an accelerating force on the grains.

Alternatively, the powder dispenser 36 may also be configured as or comprise a powder applicator, as it is known for example from the widely established process of powder coating. Hereby, an airstream would accelerate the powder grains 33. A corresponding metering and agitation unit 35 in this case may comprise a compressor, tubing and valves.

In the present embodiment, excess fingerprint development powder grains 41 travel along a direction predetermined by the surface inclination α downwards and collect in a lower bottom area of the housing 100.

The fingerprints on the document may then be inspected by the naked eye. In another embodiment, more or less automatic inspection means 50 may be provided for inspecting the surface of the document and/or the latent fingerprints 2, 3. The inspection means 50 may only be a transparent window in the housing means 100 of the device 1 providing a path of view onto the surface 11, 12 of the document. The inspection means 50 may also be an arrangement of optical elements such as lenses or a bundle of optical fibers also providing a path of view.

The inspection means 50 may also comprise a photodetector or a plurality of photodetectors. The photo detectors may be of the type of a camera providing an analog signal or a digital data feed comprising moving or still images. The photodetector should be sensitive to a range of wavelengths of a radiation, that - in combination with the chosen fingerprint development powder - provides a good distinction between areas of a latent fingerprint 2, 3 corresponding to the ridges and areas corresponding to the grooves on a fingertip. The photo detectors of a plurality of photodetectors each may be sensitive to a different range of wavelengths. Alternatively, a single photodetector may be provided with filtering means, adapted to selectively filter radiation of predetermined wavelengths. Ranges of wavelengths that may be beneficial to the inspection process include for example visible light, IR-light and/or UV-light, specific wavelengths such as provided by laser light, X-rays or microwave radiation. The inspection means 50 may further comprise matching sources of radiation, such as microwave generators or illumination means like light bulbs, LEDs, and lasers.

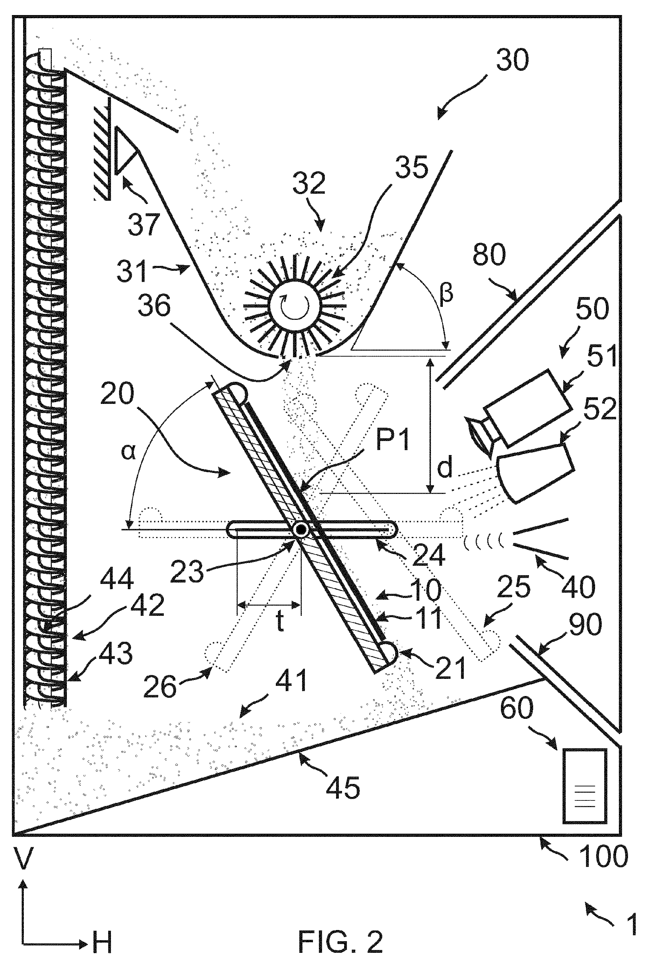

FIG. 2 is a simplified cross sectional view of another embodiment of the device 1 having a comparable underlying operating principle like the first embodiment. This embodiment also comprises a document carrier 20, a powder application system 30 comprising a powder reservoir 31 containing fingerprint development powder 32, a metering and agitation unit 35 and a powder dispenser 36, and inspection means 50.

The inspection means 50 of the present embodiment advantageously comprise one or more photodetectors, e.g. a camera 51 as well as illuminating means 52.

The document carrier comprises an axis or pivot 23 providing a rotational degree of freedom for the document carrier 20. The pivot 23 rotates the document carrier 20, and more precisely the supporting means 22 to provide the document 10 with an adjustable surface inclination α. As previously described, the document carrier can automatically rotate to assume a first angle of inclination with respect to the horizontal direction H in a first step in which a first amount of powder is applied to the document 1. In a second step, the document carrier can automatically rotate in an opposite direction of rotation (with respect to the first step) to assume a second angle of inclination in which a second amount of powder is applied to the document 1.

The device can further be configured to provide a first translational degree of freedom providing the document carrier 20 with a first traversal path 24, i.e. through a linear actuator unit. The position of the document supporting means 22 on the first traversal path 24 may be described by a distance t between a first mechanical end stop and a current position. In a second exemplary position 25 of the document supporting means, the document 10 may be retrieved through the extraction means 90.

Exemplary extraction means may be embodied as a slide that may cooperate with a lever (not shown) in the document carrier 21 to lift the document over the holding means 21 and subsequently extract the document 10. However, other appropriate extraction means 90 may include a gripper or other means to extract the document. Similarly functioning feeding means 80 adapted to feed the document into the device are depicted. Other extraction means or feeding means like conveyor belts, an array of rotating rolls or movable grippers is envisaged.

The powder application system 30 may have a rotatable brush as metering and agitation unit 35. However, for e.g. a conveyor belt, a piston, a vibrating plane (with or without an inclination) or an ultrasonic transducer that agitates the powder reservoir 31 may provide a similar functionality. The depicted powder reservoir 31 is of a tapered V-shape, having the powder dispenser 36 in a lower area. Sidewalls of the powder reservoir 31 may incline at a sidewall angle β in the range of approximately 30° to 90° and preferably 60°. In the depicted embodiment, a sieve having a mesh size can prevent an undesired flow of fingerprint development powder 32. However, an elongated opening without a sieve, but having only a small width of up to approximately 10 mm, may provide a similar functionality.

The depicted powder application system 30 may further comprise a second translational degree of freedom 37, so to speak a second traversal path 37, which is preferably perpendicular to the first traversal path 24 of the document carrier 20. In fact, by altering the distance d between powder dispenser 36 and point of impact P1 in a moment of contact of the powder grains 33 and the surface of the document 11, the present embodiment comprises simple impact velocity control means, as an increase in the distance d leads (up to a grain dependent maximum freefall velocity) automatically to an increase of the impact velocity vᵢ. Also, distance d may temporarily be enlarged to provide a better view onto the first and/or second surface of the document.

The device 1 can further comprise a control unit 60, adapted to control the metering and agitation unit 35. The control unit can be configured to control the flow (or dropping) of powder grains 33 to properly develop latent fingerprints 2, 3 on the surface 11 of the document 10. Advantageously, the control unit may further be configured to control and link up a combination of the active components of the device, such as the inspection means 50 including the camera 51 and the illumination means 52, and/or the first linear actuator 24 providing a first translational degree of freedom and a first distance t, and/or the second linear actuator 37 comprised my the impact velocity control means 37 and providing a second translational degree of freedom and a distance d, and/or the pivot 23 to provide a surface inclination α and there through an impact angle θ, and/or active feeding means 80 and/or active extraction means 90 to provide a further automation of the latent fingerprint development method/process, and/or powder recirculation means 42, adapted to provide the powder reservoir with recirculated excess powder grains 41.

The powder recirculation means 42 may be embodied, for example as an Archimedes' screw or conveyor screw 44 in an ascending tube 43, positioned within the housing means 100, which housing means may have a declining bottom 45 to recirculate the excess powder grains 41 into the powder reservoir 31.

An exemplary method of developing latent fingerprints based on the embodiments shown in FIG. 1 and FIG. 2 may be described as follows.

In a first step, a document 10 is fed to the document carrier 20. This can be done manually or automatically. A first surface of the document 1 is directed upwardly and towards the powder dispenser. A second surface 12 of the document 10 resides on the surface of the supporting means 22. Holding means 21 fixate the document 10 on the supporting means 22. Depending on the functionality of the feeding means 80, a translational 24 and/or a rotational 23 adjustment of the document supporting means 20 may be necessary to feed the document 10 to the document carrier 20.

In a next step, the document carrier may be positioned in respect to the powder dispenser 36 to enable the development of latent fingerprints 2, 3 using the fingerprint development powder 32. This step may include an adjustment of the surface inclination α, and/or of d, and/or t. The adjustment may be performed manually by a document examiner or automatically by the control unit 60. In the present embodiment, α may be adjusted to 45° to 75°, and preferably 60° with respect to the horizontal direction H. The horizontal displacement t may be adjusted to position the point of impact P1 approximately in the middle of the document 10, and the vertical distance d may be set according to an advantageous empirical value in the range of 5 mm to 200 mm that minimizes the risk of overexposure.

In a next step, the metering and agitation unit 35 meters and agitates a determined flow of powder grains 33. The powder grains 33 move from the powder reservoir 31, along the circumference of the brush of the metering and agitation unit 35 and through the powder dispenser 36. The powder grains 33 are accelerated to an impact velocity vᵢ, at which the powder grains 33 hit at least a part of the first surface 11 of the document 10 in a point of impact P1. A higher tackiness of the substances, which the latent fingerprint comprises of, than of the surface 11 of the document 10 leads to powder grains 33 sticking to the substance of the latent fingerprint 2, 3 and thereby to an enhancement of contrast developing the latent fingerprint 2, 3. The chosen surface inclination α leads to a cascading down of excess powder grains 41. Thereby, the depicted embodiment inherently removes excess powder grains 41 from at least a first part of the first surface 11 of the document 10. Alternatively, the document carrier 20 may be further inclined by increasing inclination angle α to enhance removal of the excess powder grains 41.

In an optional embodiment of the device 1, active powder removal means 40 may induce an additional removal force Fᵣ to the powder grains. For example, a stream of compressed air may blow off excess powder grains 41. Other embodiments may achieve a similar functionality. For example, a suction nozzle arranged in close proximity to the document surface 11 may suck off excess powder grains 41. Alternatively, electromagnets may lead to a controlled magnetic field, which would induce a removal force Fᵣ into magnetic powder grains 33, 41 of a magnetic fingerprint development powder 32.

In a next step, either the control unit 60 or a document examiner inspects the first surface 11 of the document 10 for developing latent fingerprints 2, 3. Depending on the result of the inspection, the control unit 60 or the document examiner may chose from essentially four possible next steps:
Possible step I; inspection result: at least a first latent fingerprint may develop, however it is still undetectable and/or underdeveloped. A new iteration of the development method gets started by returning to the step of activating the metering and agitation unit 35.
Possible step II; inspection result: the at least first latent fingerprint is still underdeveloped, although a certain number of iterations already took place. A new iteration is started by returning to the step of adjusting operational parameters. The magnitude of surface inclination α may be decreased, possibly even down to 0°; and/or the impact velocity vᵢ may be increased, for example by increasing the vertical distance d between powder applicator 36 and point of impact P1 if gravity is the force field essentially accelerating the powder grains 33.
Possible step III; inspection result: A first area of the surface 11 of the document 10 is properly developed. To develop another area of the surface 11 of the document, surface inclination angle α may be mirrored on a vertical axis (e.g. +60° becomes -60°, or the relative position between powder dispenser 36 and document 10 is altered, for example by an adjustment of distance t. A new iteration of the fingerprint development method is started afterwards.

More generally, the surface inclination α may be adjusted in the opposite direction of rotation of the document carrier 20. However, d and/or t may also be adjusted. The adjustment may again be performed manually by a document examiner or automatically by the control unit 60. In the present embodiment, α may again be adjusted to 45° to 75°, and preferably 60° with respect to the horizontal direction H. The distance t may be maintained to position the point of impact P1 approximately in the middle of the document 10, and the vertical distance d may also be maintained to be set according to an advantageous empirical value that minimizes the risk of overexposure.

In a further step, the metering and agitation unit 35 meters and agitates again a determined flow of powder grains 33. In the present embodiment, the powder grains 33 move from the powder reservoir 31, along the circumference of the brush of the metering and agitation unit 35 and through the powder dispenser 26. The powder grains 33 are accelerated to an impact velocity vᵢ, at which the powder grain 33 hits at least a part of the first surface 11 of the document 10 in a point of impact P1. A higher tackiness of the substances, which the latent fingerprint comprises of, than of the surface 11 of the document 10 leads to powder grains 33 sticking to the substance of the latent fingerprint 2, 3 and thereby to an enhancement of contrast developing the latent fingerprint 2, 3. The chosen surface inclination α leads to a cascading down of excess powder grains 41. Thereby, the depicted embodiment inherently removes excess powder grains 41 from the first surface 11 or the document 10.

Possible step IV; inspection result: The latent fingerprints 2, 3 on the document 10 are properly developed or no latent fingerprints become detectable although numerous iterations of possible step one and possible step two took place. The document 10 is extracted from the document carrier 20, either by the document examiner or by extraction means 90. The method for developing latent fingerprints is finished.

In an advantageous embodiment of the invention, the control unit 60 may select operational parameters from a wide range and a multitude of possible next method steps far exceeding the aforementioned three possible steps.

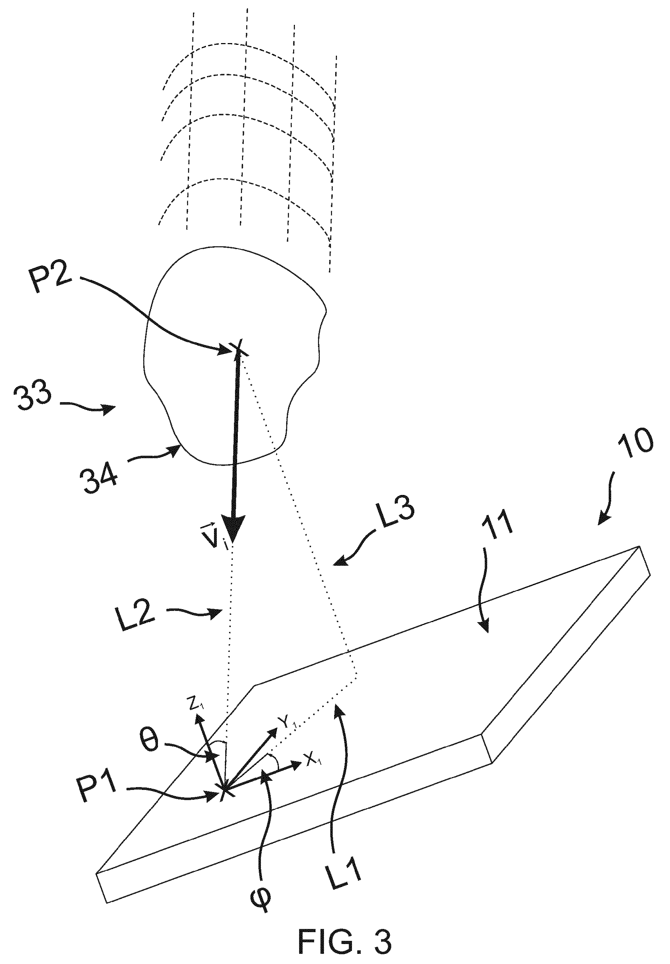

FIG. 3 shows a document 10 having a first surface 11 and a second surface and a powder grain 33 of a fingerprint development powder 32 according to an embodiment of the invention. The powder grain 33 has a center of gravity P2. The powder grain 33 travels towards a surface 11 of the document 10. Therefore, the powder grain 33 has a velocity vector vᵢ comprising a direction of travel and a velocity v. A Cartesian coordinate system C₁ is having an X-axis X₁, a Y-axis Y₁, and a Z-axis Z₁ being orthogonal to each other, and having a point of intersection being positioned in a point of impact P1 in a moment of contact of the powder grain 33 and the surface 11 of the document 10. The X-axis X₁ and the Y-axis Y₁ span a tangential X/Y-plane on the surface 11 of the document 10 in the point of impact P1. For reasons of simplicity it is assumed that the powder grain is approximately of spherical shape. Therefore, the point of impact P1 can be assumed to lie on a second auxiliary line L2 extending through the center of gravity P2 of the powder grain in the direction of the velocity vector vᵢ. Two more auxiliary lines are shown. The third auxiliary line L3 extends through the center of gravity P2 of the powder grain 33 in a direction parallel to the Z-axis Z₁. The first auxiliary line L1 extends through the point of impact P1 and through a point in which the third auxiliary line L3 intersects the tangential X/Y-plane. A first angle ϕ in the range of 0° to 360° describes the rotation of the first auxiliary line L1 about the Z-axis Z₁ in relation to the X-axis X₁. A second angle θ in the range of 0° to 90° lies between the Z-axis Z₁ and the second auxiliary line L2. The second angle θ is also referred to as the impact angle θ. Considering the fingerprint development method the impact angle θ is in the range of 0° to 75°, and more preferably in the range of 0° to 60°. Even more preferably, the impact angle θ would be small. However, conflicting requirements or constraints may lead to a deviating preferable impact angle θ in the range of 45° to 75°. For example a surface inclination of 60° provides a good development of latent fingerprints, while excess powder grains 41 are removed from the surface of the document by gravity.

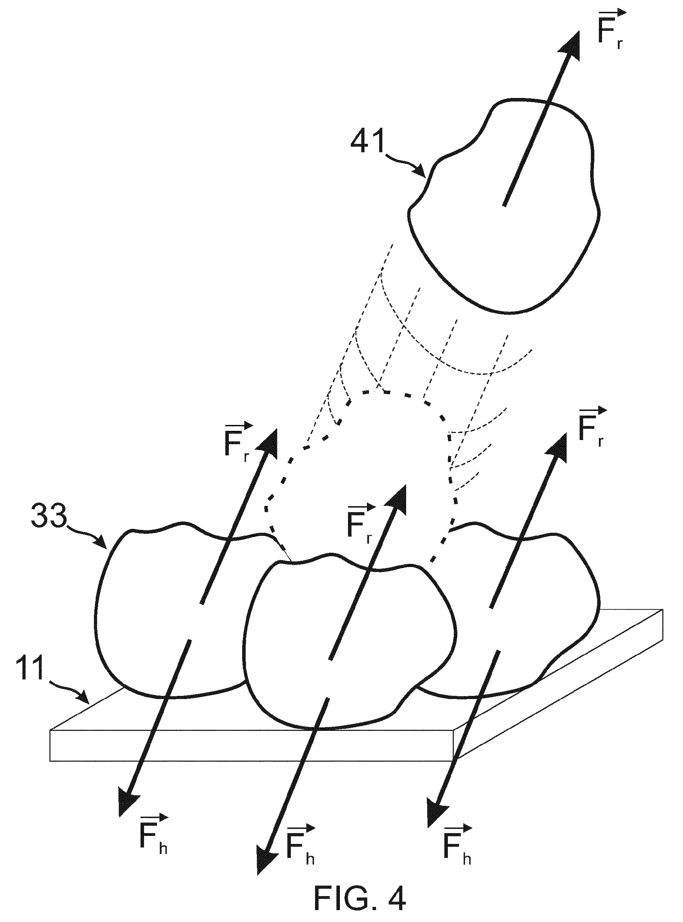

FIG. 4 shows four exemplary powder grains 33 of which one is an excess powder grain 41 being removed by the removal force Fᵣ. The three other powder grains 33 not being an excess powder grain 41 are hold back by a holding force Fₕ, which may comprise force components for example resulting from friction, from gravity and/or from tackiness of the substances the latent fingerprint comprises of. In a moment, when Fᵣ exceeds Fₕ, the powder grains 33 will be accelerated and thereby removed from the surface of the document. To enable removal of excess powder grains 41, Fᵣ has to at least provide a directional component in the X/Y-plane or preferably Fᵣ is being directed away from the surface 11 of the document 10. Even more preferably, the direction of Fᵣ lies within a conical envelope having an opening angle of 150° or less. Most preferably Fᵣ would be in a direction of normal vector Z₁.

Although the invention has been described hereinabove with reference to specific embodiments, it is not limited to these embodiments and no doubt further alternatives will occur to the skilled person that lie within the scope of the invention as claimed.

## Claims

1. A device (1) for developing and/or inspecting latent fingerprints (2, 3) on a document, in particular a banknote (10), having a first surface (11) and a second surface (12), comprising:
a. a document carrier (20)
i. comprising holding means (21) for holding the document, and
ii. adapted to provide access to the first and/or second surface (11, 12) of the document, and
b. a powder application system (30), comprising:
i. a powder reservoir (31), adapted to contain a fingerprint development powder (32) having powder grains (33),
ii. a metering and agitation unit (35),
iii. a powder dispenser (36), wherein
iv. the powder application system is adapted to
- apply the fingerprint development powder (32) to the first and/or second surface (11,12) of the document, and
- provide a predetermined impact velocity (vᵢ) of the powder grains (33) in a moment of contact with the first and/or second surface (11, 12) of the document (10).

2. The device (1) according to claim 1, wherein the document carrier (20) is configured to be tiltable around a pivot (23) leading to a rotational degree of freedom resulting in a changeable surface inclination α.

3. The device (1) according to claim 1 or 2, wherein the document carrier (20) and the powder dispenser (36) are arranged such that powder grains drop over a distance of 5 mm to 200 mm.

4. The device (1) according to anyone of the preceding claims, comprising powder recirculation means (42), adapted to recirculate excess fingerprint development powder grains (41) that have been removed from the surface (11,12) of the document (10) into the powder reservoir (31).

5. The device (1) according to anyone of the preceding claims, comprising
a. feeding means (80), adapted to feed the document (10) to the document carrier (20), and/or
b. extraction means (90), adapted to extract the document (10) from the document carrier (20).

6. The device (1) according to anyone of the preceding claims, comprising a control unit (60), adapted to control the metering and agitation unit (35).

7. The device (1) according to anyone of the preceding claims, comprising document inspection means (50).

8. A method of developing latent fingerprints (2, 3) on a document (10) using the device (1) according to anyone of claims 1 to 7, comprising the steps of:
a. placing the document (10) on the document carrier (20),
b. applying the fingerprint development powder (32) that is contained in the powder reservoir (31) to a surface (11, 12) of the document (10),
c. removing excess powder grains (41) from the surface (11, 12) of the document (10),
d. inspecting the document (10).

9. The method according to claim 8, comprising: tilting the document carrier while applying the fingerprint development powder (32).
